Europäisches Patentamt

European Patent Office

Office européen des brevets

(19)

(11) Veröffentlichungsnummer: **0 065 149**
B1

(12) EUROPÄISCHE PATENTSCHRIFT

(45) Veröffentlichungstag der Patentschrift:
10.07.85

(21) Anmeldenummer: 82103657.1

(22) Anmeldetag: 29.04.82

(51) Int. Cl.⁴: **B 23 B 51/00,** B 23 C 5/14,
B 23 C 5/22

(54) Zerspanungswerkzeug mit stirnseitig einsetzbarer Messerplatte.

(30) Priorität: 14.05.81 DE 3119189

(43) Veröffentlichungstag der Anmeldung:
24.11.82 Patentblatt 82/47

(45) Bekanntmachung des Hinweises auf die Patenterteilung:
10.07.85 Patentblatt 85/28

(84) Benannte Vertragsstaaten:
DE FR GB IT SE

(56) Entgegenhaltungen:
EP - A - 0 008 972
EP - A - 0 027 174
US - A - 4 120 601

(73) Patentinhaber: MAPAL Fabrik für Präzisionswerkzeuge
Dr. Kress KG, Obere Bahnstrasse 13, D-7080 Aalen (DE)

(72) Erfinder: Kress, Dieter, Dr. Ing. Dipl.-Ing.,
Walkstrasse 87, D-7080 Aalen (DE)
Erfinder: Häberle, Friedrich, Fliederstrasse 14,
D-7081 Lauchheim (DE)

(74) Vertreter: Patentanwälte Dr. Ing. Eugen Maier Dr. Ing.
Eckhard Wolf, Pischekstrasse 19, D-7000 Stuttgart 1 (DE)

## Beschreibung

Die Erfindung betrifft ein Zerspanungswerkzeug mit einer in einen stirnseitigen Schlitz eines Messerkopfes auswechselbar einsetzbaren, zwei axial-symmetrische Schneiden aufweisenden Messerplatte, die zwischen den beiden, den Schlitz bildenden Backen des Messerkopfes mittels eines diese Backen und die Messerplatte durchsetzenden Spannbolzens einspannbar ist. Eine derartige Ausbildung ist aus EP-A-0 027 174 bekannt.

Bei Zerspanungswerkzeugen dieser Gattung weist die schaftseitige Begrenzung des die Messerplatte aufnehmenden Schlitzes eine, meist zwei einstellbare Widerlageflächen auf, gegen die sich die Messerplatte abstützt. Die Ausbildung dieser Widerlagerflächen macht, um eine exakt axial-symmetrische Einspannung der Messerplatte zu gewährleisten, eine aufwendige Bearbeitung des Messerkopfes erforderlich.

Die Ausbildung dieser Widerlagerflächen bereitet insbesondere dann Schwierigkeiten, wenn die zwischen den Backen eingespannte Messerplatte eine Wendemesserplatte ist, die vier Schneiden aufweist, von denen jeweils zwei axialsymmetrisch ausgebildete Schneiden im Eingriff sind.

Der Erfindung liegt die Aufgabe zugrunde, die Einspannung und Fixierung einer Messerplatte zwischen den beiden Backen des Messerkopfes unter Verzicht auf solche schaftseitige, eine Verdrehung der Messerplatte um die Achse des Spannbolzens verhindernde Widerlagerflächen zu vereinfachen.

Diese Aufgabe wird gemäß der Erfindung dadurch gelöst, daß die Messerplatte an einer ihrer beiden Breitseiten einen Ansatz mit parallelen, zu der Achse der den Spannbolzen aufnehmenden Bohrung symmetrischen, quer zur Drehachse des Werkzeugs sich erstreckenden Begrenzungsflächen aufweist, der formschlüssig in eine Aussparung eines der beiden Backen eingreift. Diese Anordnung eines Ansatzes an einer Breitseite der Messerplatte hat bei einer Wendemesserplatte den zusätzlichen Vorteil, daß die Wendemesserplatte nur funktionsgerecht in den Messerkopf eingesetzt werden kann. Sind die beiden vorderen, im Eingriff stehenden axialsymmetrisch ausgebildeten Schneiden abgenutzt, so braucht die Messerplatte nur seitlich aus der Führung des einen Backens herausgeschoben, um die Achse der Messerplattenbohrung um 180° geschwenkt und wieder zwischen die Backen eingeschoben zu werden. Die Messerplatte kann eine Wendemesserplatte gemäß Anspruch 2 sein.

In der Zeichnung ist ein Ausführungsbeispiel des erfindungsgemäßen Zerspanungswerkzeugs dargestellt. Es zeigt

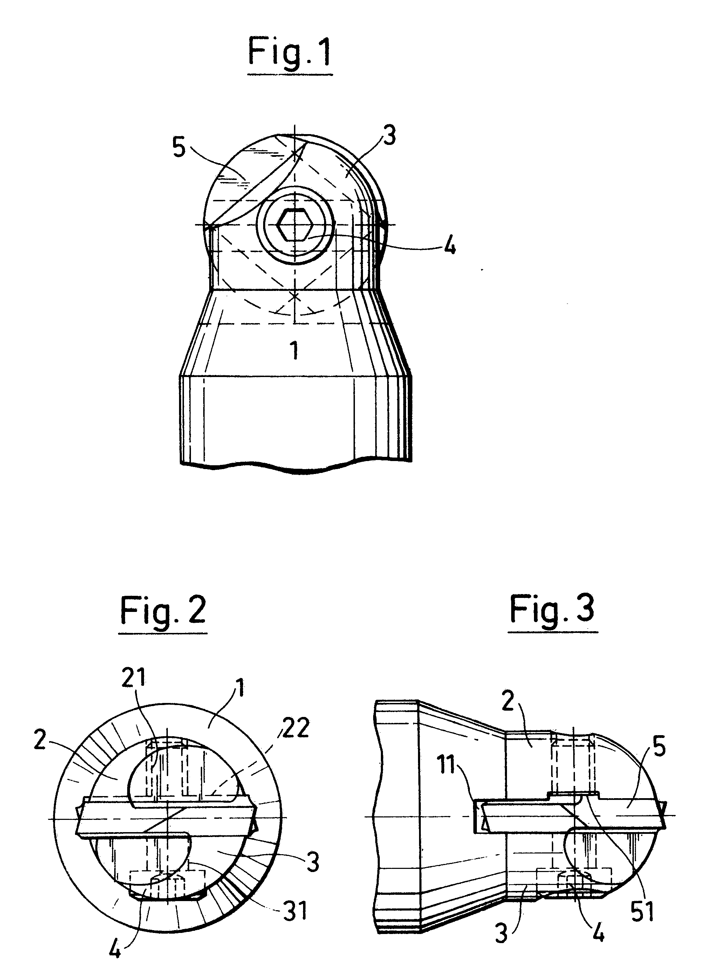

Fig. 1 eine Seitenansicht des Messerkopfes in Richtung auf die einen Ansatz aufweisende Breitseite der Messerplatte gesehen,

Fig. 2 eine Stirnseitenansicht des Messerkopfes nach Fig. 1, und

Fig. 3 eine Seitenansicht des Messerkopfes nach Fig. 1 in Richtung auf eine Schmalseite der Messerplatte gesehen.

Der Messerkopf 1 weist zwei einen Schlitz 11 bildende Backen 2 und 3 auf, deren einer eine Gewindebohrung 21 und deren anderer eine Bohrung 31 mit einer Ringschulter aufweist. Diese Bohrungen nehmen den an seinem Ende mit einem Gewinde versehenen Spannbolzen 4 auf. Die in den Schlitz 11 eingesetzte Messerplatte 5 weist im mittleren Bereich einer ihrer Breitseiten einen Ansatz 51 auf, der in eine an der Innenfläche des Backens 2 vorgesehene Aussparung 22 eingreift.

## Patentansprüche

1. Zerspanungswerkzeug mit einer in einen stirnseitigen Schlitz (11) eines Messerkopfes (1) auswechselbar einsetzbaren, zwei axial-symmetrische Schneiden aufweisenden Messerplatte (5), die zwischen den beiden, den Schlitz (11) bildenden Backen (2, 3) des Messerkopfes (1) mittels eines diese Backen und die Messerplatte (5) durchsetzenden Spannbolzens (4) einspannbar ist, dadurch gekennzeichnet, daß die Messerplatte (5) an einer ihrer beiden Breitseiten einen Ansatz (51) mit parallelen, zu der Achse der den Spannbolzen (4) aufnehmenden Bohrung symmetrischen, quer zur Drehachse des Werkzeugs sich erstreckenden Begrenzungsflächen aufweist, der formschlüssig in eine Aussparung (22) eines der beiden Backen (2, 3) eingreift.

2. Zerspanungswerkzeug nach Anspruch 1, dadurch gekennzeichnet, daß die Messerplatte (5) eine Wendemesserplatte ist, die vier Schneiden aufweist, von denen jeweils zwei an einer Messerplattenhälfte vorgesehene Schneiden axial-symmetrisch angeordnet sind und jeweils zwei mit ihren Spanflächen nach derselben Breitseite der Messerplatte weisende Schneiden symmetrisch zur Achse der den Spannbolzen aufnehmenden Bohrung der Messerplatte angeordnet sind.

## Claims

1. Cutting tool with a cutter plate (5) having two axially symmetrical blades and insertable in a replaceable manner in a front end slot (11) of a cutter head (1), wherein the plate can be clamped between the two jaws (2, 3) of the cutter head (1) forming the slot (11) by means of a clamping bolt passing through these jaws and the cutter plate (5), characterised in that the cutter plate (5) has on one of its two broad sides a shoulder (51) with parallel facets extending transverse to the rotational axis of the tool and symmetrical with respect to the axis of the bore accommodating the clamping bolt (4), which shoulder engages in a positive locking manner in a recess (22) of one of the two jaws (2, 3).

2. Cutting tool according to claim 1, characterised in that the cutter plate (5) is a reversible cutter plate (5) which has four blades, of which two blades provided on one half of the cutter plate are arranged in an axially symmetrical manner and the other two blades are arranged symmetrically to the axis of the bore of the cutter plate accomodating the clamping bolt und with their clamping faces pointing towards the same broad side of the cutter plate.

## Revendications

1. Outil à enlever des copeaux, comprenant une plaque (5) formant couteaux qui présente deux tranchants à symétrie axiale et peut s'engager interchangeablement dans une fente frontale (11) qui est pratiquée dans une tête porte-lames (1) et peut être serrée entre les deux mâchoires (2, 3) formant la fente (11) de la tête porte-lames (1) au moyen d'un boulon de serrage (4) traversant ces mâchoires et la plaque (5) formant couteaux, caractérisé en ce que la plaque (5) formant couteaux présente sur une de ses deux grandes faces une saillie (51) ayant des surfaces limitantes parallèles qui sont dirigées perpendiculairement à l'axe de rotation de l'outil, sont symétriques par rapport à l'axe du trou qui reçoit le boulon de serrage (4), et elle s'engage dans un évidement (22), grâce à la forme des deux éléments, d'une des deux mâchoires (2, 3).

2. Outil à enlever des copeaux selon la revendication 1, caractérisé en ce que la plaque (5) formant couteaux est une plaque retournable qui présente quatre tranchants, deux tranchants étant prévus sur chacune des moitiés de la plaque formant couteaux et étant disposés symétriquement par rapport à l'axe, et deux tranchants dont les faces d'attaque sont tournées ver la même grande face de la plaque formant couteaux étant disposés symétriquement par rapport à l'axe du trou de la plaque formant couteaux qui reçoit le boulon de serrage.

# Fig.1

# Fig.2

# Fig.3